# EUROPEAN PATENT SPECIFICATION

(11) **EP 2 537 411 B1**
(45) Date of publication and mention of the grant of the patent: **25.09.2013**
(21) Application number: 12172845.5
(22) Date of filing: 20.06.2012
(51) Int. Cl.: A01G 9/08, A47F 7/00

(54) **A method of stabilising multiple individual containers and a wire rack for use in the method**
Verfahren zur Stabilisierung mehrerer einzelner Behälter und Drahtgestell zur Verwendung bei dem Verfahren
Procédé de stabilisation de plusieurs conteneurs individuels et châssis en fil métallique destiné à être utilisé dans le procédé

(30) Priority: 22.06.2011 EP 11171114
(43) Date of publication of application: 26.12.2012
(73) Proprietor: Van Schaik, Florus Jan, 6741 PH Lunteren (NL)
(72) Inventor: Van Schaik, Florus Jan, 6741 PH Lunteren (NL)
(74) Representative: Janssen, Paulus J. P.

(56) References cited:
- EP-A1- 0 576 336
- WO-A1-2006/051044
- DE-A1-102006 056 285
- DE-U1- 20 318 045

## Description

The invention pertains to methods for positioning and stabilising multiple separate containers using a wire rack having a stabilising plane comprising multiple meshes, the dimensions of the meshes corresponding to the outer dimensions of the containers, by arranging each container in a mesh of the rack such that the meshes enclose the containers to enable stabilising thereof. The invention also pertains to a wire rack for use in these methods, wherein the meshes are formed by a first group of multiple substantially parallel spaced wires extending in a first direction, and connected thereto a second group of multiple substantially parallel spaced wires extending in a second direction perpendicular to the first direction, the rack also comprising multiple supporting elements being connected to the stabilising plane to enable the plane to be supported such that it takes a position at a predetermined distance above a ground plane.

### Background art

US 7,815,059 discloses a rack for supporting a plurality of containers, in particular containers filled with plants. The known rack has a stabilising plane that comprises two substantially parallel spaced wires (in particular rectangular profiled tubes 131) extending in a first direction, and connected thereto, multiple substantially parallel spaced, movable wires (denoted as "braces" 135 in the '059 patent) extending in a direction perpendicular to the said two wires. The said two wires and movable braces thereby form multiple meshes in the stabilising plane, each mesh being suitable for enclosing one of the said containers. At both ends of the said two wires, the rack is provided with supporting elements 133, these elements being connected to the stabilising plane to enable the plane to be supported at a predetermined distance above a ground surface.
In practice, the wire rack is placed with its supporting elements on a ground plane and then manually filled with containerised plants. For small wire racks this is an acceptable method of positioning and stabilising containerised goods. Document EP-A-0576336, also discloses a wire rack. However, when the racks become larger and have many tens to even thousands of mesh openings for stabilising a corresponding amount of containerised plants (such as wire racks obtainable from Floor van Schaik, Lunteren, The Netherlands), the manual filling of the wire rack has several disadvantages. Firstly, when a person would cross a wire rack on foot to reach the middle meshes, there is a substantial danger of sticking into a mesh opening with one or two feet, which may lead to the person falling over the rack and getting injured. Also, in every day practice in large facilities where goods are containerised by thousands a day and then brought to a remote site for displaying, processing etc. (e.g. containerised plants are transported from the containerizing site to the show or grow site; unbaked bread is transported in backing tins to ovens; bottled wine is transported to a transfer point etc), the containers are often transported in the form of a grid of containers, the containers being merely supported by the forks of a fork lift (in many cases special forks are used having three or more rod-shaped teeth). Even when the grid exactly corresponds to the meshes of the rack, the containers cannot be simply lowered onto the rack since the forks ultimately will press the rack upon lowering the containers and thus possibly damage the rack. To prevent this, the containers are manually picked from the forks and positioned in the rack. This is a time consuming process and given the above, also a possibly dangerous process if sufficient care is not taken.

### Summary of the invention

It is an object of the invention to device a method that at least mitigates the problems associated with known methods of positioning containers in wire racks. To this end a first method has been devised comprising placing the rack on a ground plane such that the stabilising plane is adjacent the ground plane, arranging the containers in a regular grid, the grid corresponding to the meshes, lifting the containers with a fork of a fork lift, moving the containers towards the wire rack, bringing the grid of containers in alignment with the meshes, lowering the containers to the ground plane until they are supported by the said ground plane, removing the fork from the grid of containers, lifting the rack away from the ground plane until the meshes enclose the containers to enable stabilising thereof, and ultimately placing at least one supporting element underneath the rack to keep the rack in a stabilising position. In this method, since the stabilising plane, in its starting position is adjacent the ground plane (for example by simply lying flat on the ground, actually touching the ground plane), the containers can be lowered with the fork lift without the fork teeth pressing the stabilising plane. As soon as the containers are supported by the ground plane, the containers are no longer supported by the fork teeth, and the latter can than be simply removed by retracting them out of the grid of containers. In order to provide for the stabilizing function of the stabilising plane, the rack is thereafter lifted until the meshes (in fact the wires that form the meshes) enclose (e.g. by grasping) the containers. The stabilising plane is then kept at that height by placing one or more supporting elements underneath the stabilising plane, which element or elements rest on the ground plane and provide for sufficient support of the stabilising plane. From then on, the stabilising action is the same as with prior art wire racks. This method is enabled by the presence of the one or more support elements that do not have a fixed position with respect to the stabilising plane as is the case with prior art wire racks. The invention also pertains to this new rack that enables the present methods to be applied.

It is recognised that this new rack also enables a next method which can be used when e.g. manual positioning of the containers is preferred. In this method the rack is also placed with the stabilising plane adjacent the ground plane, where after each container is (optionally manually) placed in a corresponding mesh of the wire rack, leaving the container supported by the ground plane, and after all containers have been placed lifting the rack away from the ground plane until the meshes enclose the containers to enable stabilising thereof, and ultimately placing at least one supporting element underneath the rack to keep the rack in a stabilising position. It may be clear that the risk of an operator falling by getting a foot stuck in one of the meshes is substantially lower when the stabilising plane is lying more or less flat on the ground.

As explained *supra,* the methods according to the invention are advantageously enabled by the use of a new wire rack which is characterised by the presence of a hinge between each (at least one) supporting element and the stabilising plane. A hinge allows that the stabilising plane and supporting elements can be used in an assembled state (i.e. as one entity instead of separate parts), and still the supporting elements can be put in a position that allows the stabilising plane to be positioned adjacent a ground plane, by simply moving the supporting elements to become e.g. substantially parallel with the stabilising plane (e.g. by rotation), or take a position substantially above this plane (typically by translation) such that the stabilising plane may be positioned adjacent the ground surface. When the rack is filled with containers, the supporting element(s) can be freely moved to reach their position to support the stabilising plane at a predetermined position above a ground plane. The latter can be achieved for example by starting the filling action of the rack with the supporting elements being hinged away from the plane to extend parallel therefrom. It is however also possible to start filling of the rack, with the supporting elements being present underneath the plane, as long as the supporting legs do not interfere with the containers when the supporting elements are to be brought in their supporting position. This can be achieved for example easily by making sure the legs are in between the areas where containers are to be placed. It is noted that the present methods can also be performed with a rack that comprises separate supporting elements that are connected to the stabilising plane after it is lifted from the ground to reach its stabilising position at a predetermined distance above the ground surface.

### Definitions

A container is any receptacle, such as a carton, can, jar, pot, tin, bag and bottle, in which material or goods can be held or carried.

A hinge is any element for obtaining a stable mechanical connection between at least two parts, while allowing these connected parts to be moved with respect to each other, e.g. via translation, rotation (typically) or both.

A fork lift is any apparatus having a fork with multiple teeth for supporting goods, the lift being either mechanically (in particular hydraulically) or manually operable for lifting, lowering and transporting purposes.

A wire is an elongated self-supporting element, which may be massive, hollow or profiled such as for example a rod, a steel ribbon, a cylinder, a shaft, a U-, H-, L, or T-profiled ribbon, etc., either or artificial (e.g. metal, glass, plastic etc.) or natural origin (e.g. wood, bamboo etc.).

To connect parts means to unite these parts, such that in each position with respect to gravity, the parts remain together.

Two perpendicular extending lines means that the first line extends at least partly in a direction orthogonal to the second line. In other words, the first line forms an angle above zero degrees to at most ninety degrees with the second line.

### Embodiments of the invention

In a further embodiment of the methods, in which embodiment the at least one supporting element is hinged to the stabilizing plane, upon placing the rack on the ground plane, the supporting element is hinged away from the stabilizing plane to be substantially parallel thereto (so that the stabilising plane may be placed actually adjacent the ground plane), and after lifting the rack, the supporting element is hinged towards the stabilizing plane to extend in a direction perpendicular thereto. In this embodiment, the rack including the stabilizing plane and supporting element, can be transformed in a more or less completely flat constitution, thereby advantageously enabling easy positioning of the containers in the meshes of the stabilizing plane. As soon as all containers have been placed, and the stabilizing plane has been brought in its lifted position to enclose the containers for stabilizing purposes, the supporting element is simply hinged towards the stabilizing plane until it extends substantially perpendicular thereto. The latter enables its functioning as a support to keep the stabilizing plane at the predetermined height with respect to the ground plane.

In another embodiment, after the at least one supporting element is placed to keep the rack in a stabilising position, an additional supporting element is placed to support at least a centre area of the stabilising plane. With large stabilising planes, the wires need to be extremely rigid to prevent sagging. High rigidity means more expensive materials or more expensive dimensions (e.g. profiled beams). It was recognised that such expensive constructions can be left when an additional supporting element is placed underneath the plane to support at least a centre area of the stabilising plane. This way, simple wires such as steel rods or bamboo canes can be used to constitute the rack.

In yet a further embodiment, wherein the hinge allows the supporting element to be hinged towards the stabilizing plane to become substantially parallel therewith, after the containers are removed, the supporting element is hinged towards the stabilizing plane to become substantially parallel therewith. In this embodiment, the footprint of the wire rack is made minimal when no longer in use for stabilizing containers. This is advantageous with respect to volume saving in a warehouse or shed where the racks are stored when not in use.

With respect to the rack, the above further embodiments are enabled by the rack having a hinge that allows the supporting element to move between a first and second position, the first position being substantially parallel to the plane and the second position being substantially perpendicular to the plane. In particular, the hinge may allow the supporting element to be hinged towards and away from the stabilising plane.

In yet another embodiment, in which embodiment the rack has a substantially rectangular shape, multiple supporting elements are positioned alongside two opposing sides of the plane. In this embodiment, after the tack is lifted to obtain its stabilising position, typically by manually lifting the rack at two opposite sites of the rack, the supporting elements can simply grasped by hand while keeping the rack in its stabilising position, and hinged towards their supporting position.

In a further embodiment the supporting elements are individual elements (for example legs formed out of a piece of metal rod, which might have a simple reversed T-shape, or reversed Y-shape etc.), wherein each individual element corresponds to one individual hinge. In this embodiment, each hinge connects one single supporting element to the plane, which makes the hinging process easier to handle for an operator. Although it may consume more time to hinge individual elements towards and away from the plane, it allows for better control.

In an alternative embodiment the supporting elements are elongated elements that extend along the entire sides of the plane. In this embodiment the maximum supporting capacity can be obtained along the length of the rack, while as little as only one supporting element needs to be hinged at each side. This allows for a very fast operation.

In another embodiment the at least one supporting element in essence has the same structure of interconnected wires as the stabilising plane. In this embodiment in essence the same type of production process can be used to constitute the stabilising plane and the supporting element. This is favourable from an economic point of view.

In yet another embodiment each wire is a metal rod. Metal rods have proven to be ideally suitable as wires to constitute the new wire rack for use in the new methods according to the invention.

In still another embodiment the hinge is a separate element to which the plane and a supporting element can be operatively connected. It was recognised that the provision of a hinge as separate element has important advantages over a hinge that is integral with the stabilising plane and/or support elements. A separate hinge to which the plane and the support element can be connected allows replacement of the hinge when broken. Next to this, the number of hinges per length of the rack can be adjusted to specific requirements. Also, the integral production costs of the rack may be lower when assembling the rack from separate parts.

In a further embodiment the plane and supporting element can be removably connected to the hinge. This allows easy replacement from either part when broken. Also, the support element may be simply detached from the rack when not in use for stabilising the containers. For example, for transport purposes of the racks, it may be advantageous to simply pack the stabilising planes and supporting elements separately (i.e. not as completely assembled wire racks), and assemble the racks at their site of use.

In another further embodiment the supporting element can be adjustably connected to the hinge to obtain at least two predetermined distances. In this embodiment the hinge allows that the supporting element can take at least two different positions with respect to the centre of the hinge in order to be able and provide for at least two different heights that the plane can take with respect to the ground surface (e.g. to accommodate containers of at least two corresponding sizes). There are many ways in which this can be achieved using commonly known mechanics. For example, the supporting element can be removably attached to the hinge at various positions by using locking elements situated at different heights, the supporting element (in particular when this is an individual rod-shaped leg) could also be screwed into the hinge to take different positions, or the supporting element could have various click-in positions in the hinge etc.

In another embodiment the wires of the first group of multiple wires are connected to the second group of multiple spaced wires using a connection element that allows the wires to be repositioned with respect to each other. This way, the meshes can be adjusted to the size of the containers. This may be used to adequately accommodate various sizes of containers with one type of wire rack, or for example to increase the stabilising properties of the rack for a given container size, typically be adjusting the meshes such that they truly engage the containers along their circumference.

In a further embodiment the said connection element has the same form as the hinge. It has been found that the use of one type of hinge may decrease overall production costs and at the same time increase the versatility in use of the wire rack. The use of one type of hinge allows the end user to freely place supporting elements at various places underneath the stabilising plane, being either along the sides of the plane or somewhere remote from the sides for example to prevent local sagging due to the presence of particular containerised goods.

The invention will be further explained based on the following figures and examples.
Figure 1 schematically shows a wire rack according to the invention.
Figure 2 shows a hinge for constituting a rack according to figure 1.
Figure 3 shows the hinge of figure 2 wherein the supporting element is hinged away from the stabilising plane in a position substantially parallel to that plane.
Figure 4 shows the hinge of figure 2 wherein the supporting element is hinged towards the stabilising plane in a position substantially parallel thereto.
Figure 5 schematically shows a fork lift carrying a grid of containers.
Figure 6 is a front view of the fork and grid of containers as shown in figure 5.
Figure 7 schematically shows an alternative embodiment of a wire rack according to the invention.

Example 1 describes a first method according to the invention.
Example 2 describes a second method according to the invention.

### Figure 1

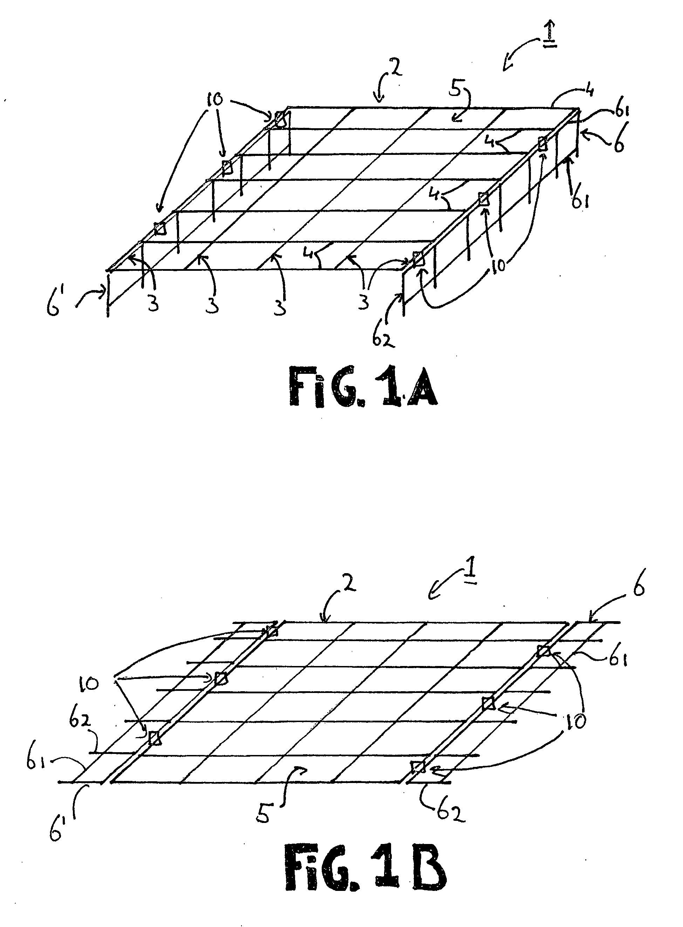

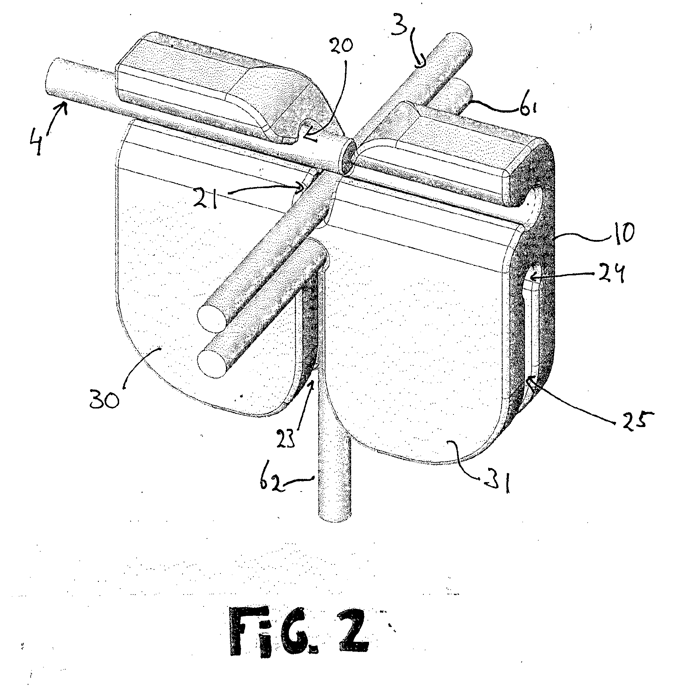

Figure 1A schematically shows a rectangular wire rack (1) according to the invention. The rack comprises a stabilising plane (2) comprising a first group of multiple substantially parallel spaced wires (3), in this case steel rods, extending in a first direction, and connected thereto a second group of multiple substantially parallel spaced wires (4), made of the same steel, extending in a second direction perpendicular to the first direction. The connection between the wires is established through welding in this embodiment. By connecting these two groups of wires this way, the plane is thus provided with multiple meshes (5), each mesh being suitable for enclosing a container. The meshes are dimensioned such that they are able to sufficiently stabilise a container when place into the rack such as known from US 7,815,059.
The rack is supported by two supporting elements (6 and 6') which are positioned alongside two opposing sides of the plane. The supporting elements in this embodiment are elongated elements that extend along the entire sides of the plane (2). In essence, the supporting elements (6, 6') have the same structure of interconnected wires as the stabilising plane (2), in this case consisting of short pillars 62 and rods 61 which extend along the length of the stabilising plane.
Each supporting element is removably connected to the stabilising plane by hinges 10. These hinges (see figures 2, 3 and 4 for details) allow the supporting elements to be easily detached from the plane and also enable a hinged action towards and from the plane over an angle of approximately 180°. The same hinges can also be used as connection elements to add an extra supporting element (not shown) along the centre area of the rack, e.g. when the wires bend too much in the middle section.

In an alternative embodiment (not shown), another type of hinge may be used which enables the lateral coupling of separate wire racks.

In yet another alternative embodiment (not shown) the wires 3 and 4 are not connected by welding, but by using the same hinges at each cross-point. This allows the wires to be moved with respect to each other and thus allows the adjustment of the mesh dimensions to the containers to be stabilised.

In figure 1 B the same rack is depicted. The supporting elements 6 and 6' however are hinged away from the stabilising plane 2 to enable the plane to be positioned adjacent a ground plane. In this constitution, the rack can simply be put lying on the ground to receive multiple containers in the meshes.

### Figure 2

Figure 2 shows a hinge 10 for constituting a rack according to figure 1, the hinge being composed of two substantially identical sections 30 and 31. In this embodiment, the hinge comprises a first canal 20 for taking up wire 4 from the stabilising plane. Wire 3 from that plane is taken up in second canal 21. This way, the hinge is connected to the plane. Supporting element 6 is pushed from below into hinge 10. This leads to the shown situation wherein horizontal wire 61 of the supporting element is taken up in a third canal underneath and parallel to canal 21, and pillar 62 is taken up by vertically extending canal 23. Canal 23 has an open slotted connection through section 31, to a next canal 24 which extends through the entire length of the hinge. Section 30 has the same slotted connection to canal 24. The slots provide some compliance of the sections to enable the wires 62 to be moved through the slots from one canal to another, ultimately allowing a hinged action over 180°. The canals provide a secure locking of the wires 62 when in either a horizontal or vertical position by grasping the wires.

### Figure 3

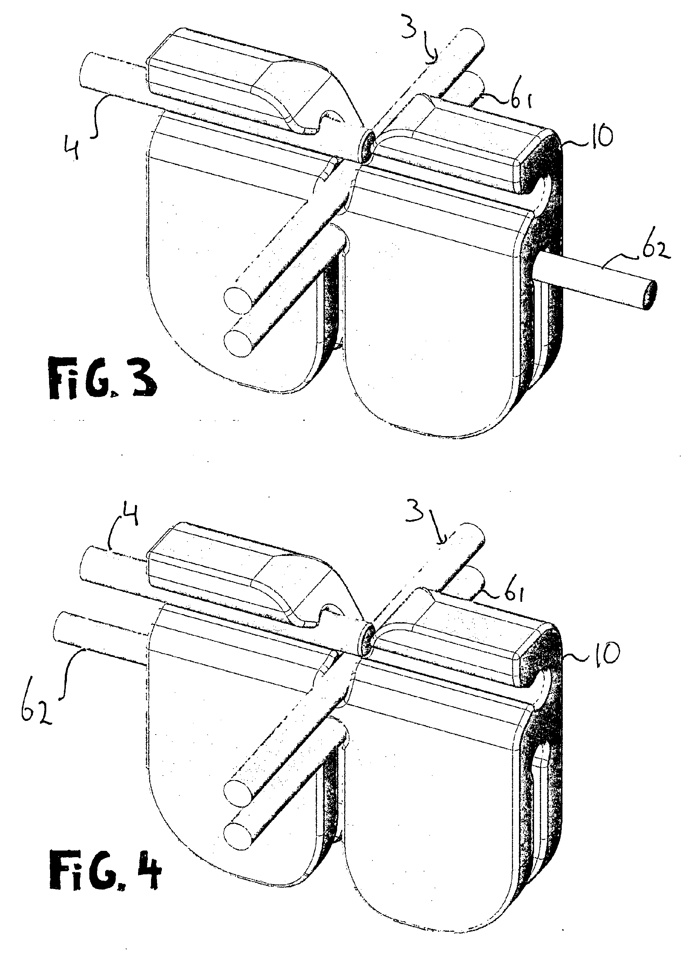

Figure 3 shows the hinge of figure 2 wherein the supporting element is hinged away from the stabilising plane over an angle of about -90 ° when compared to figure 2, the supporting element thus being in a position substantially parallel to that plane. In this constitution, pillar 62 is taken up by canal 24 in section 31 (see figure 2 for the location of the canal and section). This constitution and respective position of the supporting element with respect to the stabilizing plane is the same as indicated in figure 1 B.

### Figure 4

Figure 4 shows the hinge of figure 2 wherein the supporting element is hinged towards the stabilising plane over an angle of about +90°when compared to figure 2, the supporting element thus being in a position substantially parallel to and underneath that plane. In this constitution, pillar 62 is taken up by canal 24 in section 30 (see figure 2 for the location of the canal and section). This position is very suitable for storing and transporting the rack when not in use for stabilising containerized goods.

### Figure 5

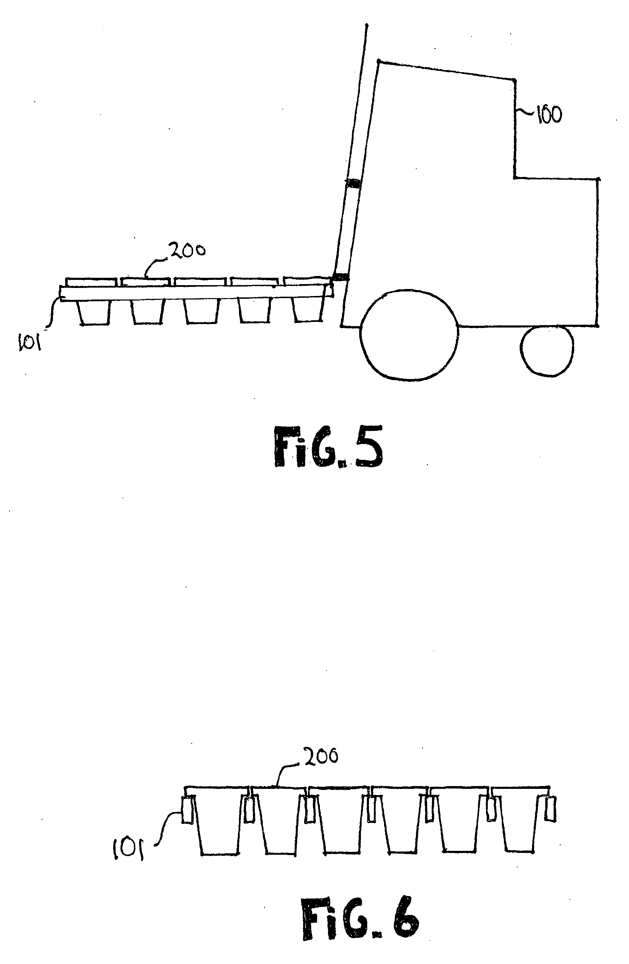

Figure 5 schematically shows a fork lift 100 carrying a grid of containers 200. In this side view of the fork lift which carries a grid of containers 200, one fork tooth of the fork 101 can be seen, as well as one row of containers 200 (for sake of clarity, the containerized goods, in this case plants, are not shown). The containers are loaded on the seven fork teeth of the fork 101 in a grid of 5x6 containers, the dimensions of which exactly match the meshes of a 5x6 stabilising plane. In practice, the grid may be substantially longer and/or wider in number of containers.

### Figure 6

Figure 6 is a front view of the fork and grid of containers as shown in figure 5. As can be seen, the containers 200 are flanged, which enables easy supporting action by the seven fork teeth of fork 101. In this case, the seven teeth carry six rows of containers 200.

### Figure 7

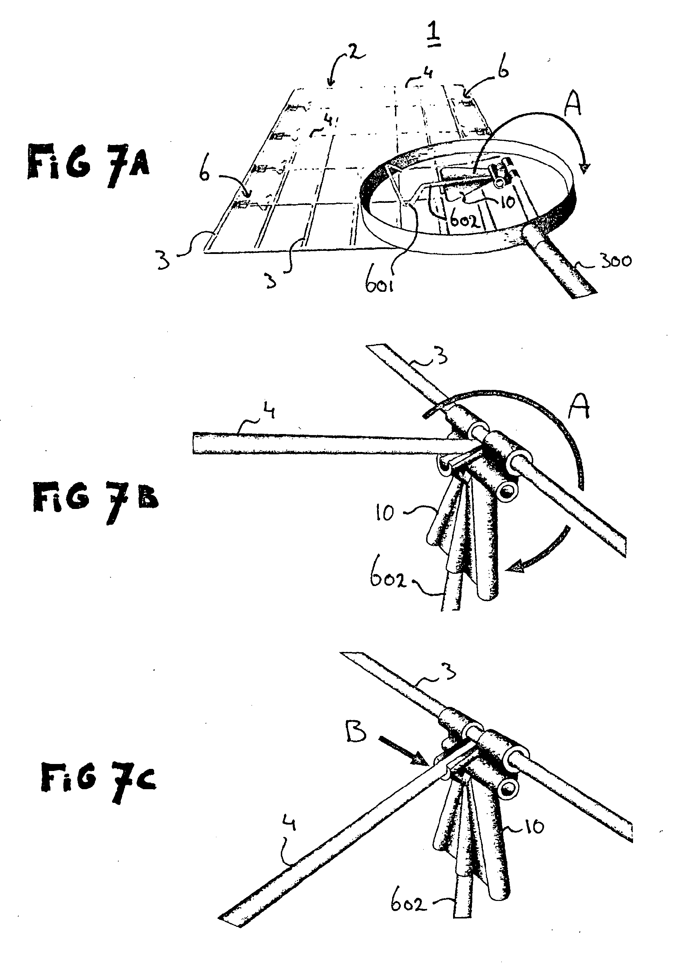

Figure 7, having sub-figures A, B and C, schematically shows an alternative embodiment of a wire rack according to the invention, viz. an embodiment wherein the supporting elements are individual elements, wherein each individual element corresponds to one individual hinge.
Figure 7A schematically shows a rectangular wire rack (1) according to another embodiment of the invention. The rack comprises a stabilising plane (2) comprising a first group of multiple substantially parallel spaced wires (3), in this case steel rods, extending in a first direction, and connected thereto a second group of multiple substantially parallel spaced wires (4), made of the same steel, extending in a second direction perpendicular to the first direction. The connection between the wires is established through welding in this embodiment. Corresponding to the rack as shown in Figure 1, by connecting these two groups of wires this way, the plane is thus provided with multiple meshes, each mesh being suitable for enclosing a container. The rack is supported by multiple individual supporting elements (6) which are positioned alongside two opposing sides of the plane. Each supporting element (6) in this embodiment is formed out of a piece of metal rod, shaped into a triangular like foot (601) and an elongated connecting rod (602). Each supporting element is connected to the stabilising plane by a sliding connection of the connecting rod (602) into a hinge 10. These hinges 10 enable a hinged action for each supporting element 7 (indicated with the arrow A in figure 7A and 7B) towards and from the plane over an angle of approximately 270°. The magnifying glass 300 (which is not part of the invention) allows a more detailed view of the hinge 10, and slidably connected rod 602 of a supporting element 6. In this embodiment, the connecting rod 602 can take various distinct positions into the hinge 10 (by having various click-in position; not shown in figure 7), allowing the plane to brought in various predetermined positions above the ground surface.
In figure 7B, the hinge 10 is shown in even greater detail which allows a closer view of its position and connection with respect to the stabilising plane (2), of which plane wires 3 and 4 are depicted. Indicated at arrow B in Figure 7C, the hinge 10 may be firmly clicked around wire 4 to provide a mechanical stable connection between the supporting element and the stabilising plane (consisting of wires 3 and 4). In this embodiment the hinge 10 is permanently connected to wire 3. The supporting element 6 itself though, can be removed from the rack by pulling it out of the hinge 10. The position of the hinge 10 as depicted in figure 7B is such that there is not a stable configuration yet between the supporting plane and the supporting element. Only by fully using the hingable action A of approximately 270°, as indicated in figure 7C, the wire 4 clicks into the hinge 10 and a stable configuration is obtained.

### Example 1

Example 1 describes a first method according to the invention. In this method, firstly a wire rack (1) having a stabilising plane (2) comprising multiple meshes (5) is taken, the dimensions of which meshes correspond to the outer dimensions of the containers to be stabilized, whereafter the rack is placed on a ground plane such that the stabilising plane is adjacent the ground plane (see figure 1B). Then, the containers are arranged in a regular grid that corresponds to the said meshes on a fork of a fork lift as explained in connection with figures 5 and 6. Then the containers are lifted with the fork of the fork lift and moved towards the wire rack. Next, the grid of containers is brought in alignment with the meshes by placing the fork exactly above the stabilising plane of the wire rack, each container being in line with one mesh of the rack. Then, the containers are lowered to the ground plane until they are supported by the said ground plane, and thus no longer by the teeth of the fork. Thereafter, the fork can be easily removed from the grid of containers by retracting the fork lift from the rack. Then the rack is lifted away from the ground plane by two people standing on opposite sides of the rack, until the meshes enclose the containers to enable stabilising thereof. Then, the people hinge the supporting elements over an angle of +90°to become substantially perpendicular to the stabilising plane of the rack, such that they can serve as supporting elements to keep the plane in its stabilising position.

### Example 2

Example 1 describes a second method according to the invention. In this second method, firstly a wire rack (1) having a stabilising plane (2) comprising multiple meshes (5) is taken, the dimensions of which meshes correspond to the outer dimensions of the containers to be stabilized, whereafter the rack is placed on a ground plane such that the stabilising plane is adjacent the ground plane (see figure 1 B). Thereafter, containers are manually placed the meshes of the wire rack, leaving the containers supported by the ground plane. After all containers have been placed in the meshes, the rack is lifted away from the ground plane by two people standing on opposite sides of the rack, until the meshes enclose the containers to enable stabilising thereof. Then, the people hinge the supporting elements over an angle of +90 ° to become substantially perpendicular to the stabilising plane of the rack, such that they can serve as supporting elements to keep the plane in its stabilising position.

## Claims

1. A method for positioning and stabilising multiple separate containers (200) comprising:
- taking a wire rack (1) having a stabilising plane (2) comprising multiple meshes (5), the dimensions of the meshes corresponding to the outer dimensions of the containers,
- placing the wire rack on a ground plane such that the stabilising plane is adjacent the ground plane,
- arranging the containers in a regular grid, the grid corresponding to the meshes,
- lifting the containers with a fork (101) of a fork lift (100),
- moving the containers towards the wire rack,
- bringing the grid of containers in alignment with the meshes,
- lowering the containers to the ground plane until they are supported by the said ground plane,
- removing the fork from the grid of containers,
- lifting the rack away from the ground plane until the meshes enclose the containers to enable stabilising thereof,
- placing at least one supporting element (6,6') underneath the rack to keep the rack in a stabilising position.

2. A method for positioning and stabilising multiple separate containers (200) comprising:
- taking a wire rack (1) having a stabilising plane (2) comprising multiple meshes (5), the dimensions of the meshes corresponding to the outer dimensions of the containers,
- placing the rack on a ground plane such that the stabilising plane is adjacent the ground plane,
- placing each container in a corresponding mesh of the wire rack, leaving the container supported by the ground plane, and after all containers have been placed in the meshes,
- lifting the rack away from the ground plane until the meshes enclose the containers to enable stabilising thereof,
- placing at least one supporting element (6,6') underneath the rack to keep the rack in a stabilising position.

3. A method according to any of the preceding claims, wherein the at least one supporting element (6,6') is hinged to the stabilizing plane (2), **characterized in that** upon placing the rack (1) on the ground plane, the at least one supporting element is hinged away from the stabilizing plane to be substantially parallel thereto, and after lifting the rack, hinging the at least one supporting element towards the stabilizing plane until it extends in a direction perpendicular thereto.

4. A method according to any of the preceding claims, **characterised in that** after the at least one supporting element (6,6') is placed to keep the rack (1) in a stabilising position, an additional supporting element is placed to support at least a centre area of the stabilising plane (2).

5. A method according to claim 3 or 4, wherein the hinge (10) allows the at least one supporting element (6,6') to be hinged towards the stabilizing plane (2) to become substantially parallel therewith, **characterized in that** after the containers (200) are removed from the rack (1), the supporting element is hinged towards the stabilizing plane to become substantially parallel therewith.

6. Wire rack (1) suitable for use in any of the methods according to claim 1 to 5, the wire rack comprising:
- a stabilising plane (2) comprising a first group of multiple substantially parallel spaced wires (3) extending in a first direction, and connected thereto a second group of multiple substantially parallel spaced wires (4) extending in a second direction perpendicular to the first direction, thereby forming multiple meshes (5), each mesh being suitable for enclosing one of the said containers,
- at least one supporting element (6,6') being connected to the stabilising plane (2) to enable the plane to be supported at a predetermined distance above a ground surface,
**characterised in that** for the connection between the said at least one supporting element (6,6') and the stabilising plane (2) the rack comprises a hinge (10) between the said at least one supporting element and the stabilising plane such that the supporting element can be brought in a first position wherein the stabilising plane can be placed adjacent the ground surface to become substantially parallel therewith, and can be brought in a second position wherein the supporting element supports the plane at the predetermined distance above the ground surface.

7. A wire rack (1) according to claim 6, **characterised in that** the hinge (10) allows the supporting element (6,6') to move between a first and second position, the first position being substantially parallel to the plane (2) and the second position being substantially perpendicular to the plane.

8. A wire rack (1) according to claim 6 or 7, **characterised in that** the hinge (10) allows the supporting element (6,6') to be hinged away and towards the stabilising plane (2).

9. A wire rack(1) according to any of the claims 6 to 8, wherein the rack has a substantially rectangular shape, **characterised in that** multiple supporting elements (6,6') are positioned alongside two opposing sides of the plane.

10. A wire rack (1) according to claim 9, **characterised in that** the supporting elements (6,6') are individual elements, wherein each individual element corresponds to one individual hinge (10).

11. A wire rack (1) according to any of the claims 6 to 10, **characterised in that** each wire is a metal rod.

12. A wire rack (1) according to any of the claim 6 to 11, **characterised in that** the hinge (10) is a separate element to which the plane (2) and a supporting element (6,6') can be operatively connected.

13. A wire rack (1) according to claim 12, **characterised in that** the supporting element (6,6') can be adjustably connected to the hinge (10) to obtain at least two predetermined distances for the plane (2) above ground surface.

14. A wire rack (1) according to any of the claims 6 to 13, **characterised in that** the wires of the first group of multiple wires (3) are connected to the second group of multiple spaced wires (4) using a connection element that allows the wires to be repositioned with respect to each other.

15. A wire rack (1) according to claim 14, **characterised in that** the connection element has the same form and dimensions as the hinge (10).

## Patentansprüche

1. Verfahren zur Positionierung und Stabilisierung mehrerer separater Behälter (200), umfassend:
- Nehmen eines Drahtgestells (1) mit einer Stabilisierungsebene (2), die mehrere Maschen (5) umfasst, wobei die Abmessungen der Maschen den Außenabmessungen der Behälter entsprechen,
- derartiges Anordnen des Drahtgestells auf einer Bodenebene, dass sich die Stabilisierungsebene neben der Bodenebene befindet,
- Anordnen der Behälter in einem regelmäßigen Raster, wobei das Raster den Maschen entspricht,
- Anheben der Behälter mit einer Gabel (101) eines Gabelstaplers (100),
- Bewegen der Behälters zu dem Drahtgestell,
- Bringen des Rasters von Behältern in eine Ausrichtung mit den Maschen,
- Absenken der Behälter zu der Bodenebene, bis sie durch die Bodenebene getragen werden,
- Entfernen der Gabel von dem Raster von Behältern,
- Wegheben des Gestells von der Bodenebene, bis die Maschen die Behälter umschließen, um deren Stabilisierung zu ermöglichen,
- Anordnen wenigstens eines Stützelements (6, 6') unter dem Gestell, um das Gestell in einer Stabilisierungsposition zu halten.

2. Verfahren zur Positionierung und Stabilisierung mehrerer separater Behälter (200), umfassend:
- Nehmen eines Drahtgestells (1) mit einer Stabilisierungsebene (2), die mehrere Maschen (5) umfasst, wobei die Abmessungen der Maschen den Außenabmessungen der Behälter entsprechen,
- derartiges Anordnen des Gestells auf einer Bodenebene, dass sich die Stabilisierungsebene neben der Bodenebene befindet,
- Anordnen jedes Behälters in einer entsprechenden Masche des Drahtgestells, wobei der Behälter durch die Bodenebene getragen wird, und nachdem alle Behälter in den Maschen angeordnet wurden,
- Wegheben des Gestells von der Bodenebene, bis die Maschen die Behälter umschließen, um deren Stabilisierung zu ermöglichen,
- Anordnen wenigstens eines Stützelements (6, 6') unter dem Gestell, um das Gestell in einer Stabilisierungsposition zu halten.

3. Verfahren nach einem der vorhergehenden Ansprüche, wobei das wenigstens eine Stützelement (6, 6') gelenkig an der Stabilisierungsebene (2) angebracht ist, **dadurch gekennzeichnet, dass** das wenigstens eine Stützelement nach dem Anordnen des Gestells (1) auf der Bodenebene von der Stabilisierungsebene weg geschwenkt wird, damit es im Wesentlichen parallel dazu liegt, und das wenigstens eine Stützelement nach dem Anheben des Gestells zu der Stabilisierungsebene geschwenkt wird, bis es sich in einer senkrecht dazu verlaufenden Richtung erstreckt.

4. Verfahren nach einem der vorhergehenden Ansprüche, **dadurch gekennzeichnet, dass** nach dem Anordnen des wenigstens einen Stützelements (6, 6'), um das Gestell in einer Stabilisierungsposition zu halten, ein zusätzliches Stützelement angeordnet wird, um wenigstens einen Mittelbereich der Stabilisierungsebene (2) zu tragen.

5. Verfahren nach Anspruch 3 oder 4, wobei das Gelenk (10) gestattet, dass das wenigstens eine Stützelement (6, 6') zu der Stabilisierungsebene (2) geschwenkt wird, um im Wesentlichen parallel dazu zu liegen, **dadurch gekennzeichnet, dass** das Stützelement nach dem Entfernen der Behälter (200) von dem Gestell (1) zu der Stabilisierungsebene (2) geschwenkt wird, um im Wesentlichen parallel dazu zu liegen.

6. Drahtgestell (1), das zur Verwendung bei jedem beliebigen der Verfahren nach Anspruch 1 bis 5 geeignet ist, wobei das Drahtgestell Folgendes umfasst:
- eine Stabilisierungsebene (2), die eine erste Gruppe von mehreren im Wesentlichen parallelen beabstandeten Drähten (3), die sich in eine erste Richtung erstrecken, und damit verbunden eine zweite Gruppe von mehreren im Wesentlichen parallelen beabstandeten Drähten (4), die sich in eine senkrecht zu der ersten Richtung verlaufende zweite Richtung erstrecken, umfasst, wodurch mehrere Maschen (5) gebildet werden, wobei jede Masche zum Einschließen eines der Behälter geeignet ist,
- wenigstens ein Stützelement (6, 6'), das mit der Stabilisierungsebene (2) verbunden ist, um zu ermöglichen, dass die Ebene in einem vorherbestimmten Abstand über einer Bodenfläche getragen wird,
**dadurch gekennzeichnet, dass** das Gestell für die Verbindung zwischen dem wenigstens einen Stützelement (6, 6') und der Stabilisierungsebene (2) ein Gelenk (10) zwischen dem wenigstens einen Stützelement und der Stabilisierungsebene umfasst, so dass das Stützelement in eine erste Position gebracht werden kann, in der die Stabilisierungsebene so neben der Bodenfläche angeordnet werden kann, dass sie im Wesentlichen parallel dazu zu liegen kommt, und in eine zweite Position gebracht werden kann, in der das Stützelement die Ebene in einem vorherbestimmten Abstand über der Bodenfläche trägt.

7. Drahtgestell (1) nach Anspruch 6, **dadurch gekennzeichnet, dass** das Gelenk (10) eine Bewegung des Stützelements (6, 6') zwischen einer ersten und einer zweiten Position gestattet, wobei die erste Position im Wesentlichen parallel zu der Ebene (2) ist, und die zweite Position im Wesentlichen senkrecht zu der Ebene ist.

8. Drahtgestell (1) nach Anspruch 6 oder 7, **dadurch gekennzeichnet, dass** das Gelenk (10) gestattet, dass das Stützelement (6, 6') von der Stabilisierungsebene (2) weg und zu ihr hin geschwenkt wird.

9. Drahtgestell (1) nach einem der Ansprüche 6 bis 8, wobei das Gestell eine im Wesentlichen rechteckige Form aufweist, **dadurch gekennzeichnet, dass** mehrere Stützelemente (6, 6') entlang von zwei entgegengesetzten Seiten der Ebene positioniert sind.

10. Drahtgestell (1) nach Anspruch 9, **dadurch gekennzeichnet, dass** die Stützelemente (6, 6') einzelne Elemente sind, wobei jedes einzelne Element einem einzelnen Gelenk (10) entspricht.

11. Drahtgestell (1) nach einem der Ansprüche 6 bis 10, **dadurch gekennzeichnet, dass** jeder Draht ein Metallstab ist.

12. Drahtgestell (1) nach einem der Ansprüche 6 bis 11, **dadurch gekennzeichnet, dass** das Gelenk (10) ein separates Element ist, mit dem die Ebene (2) und ein Stützelement (6, 6') betrieblich verbunden werden können.

13. Drahtgestell (1) nach Anspruch 12, **dadurch gekennzeichnet, dass** das Stützelement (6, 6') verstellbar mit dem Gelenk (10) verbunden werden kann, um wenigstens zwei vorherbestimmte Abstände für die Ebene (2) über der Bodenfläche zu erhalten.

14. Drahtgestell (1) nach einem der Ansprüche 6 bis 13, **dadurch gekennzeichnet, dass** die Drähte der ersten Gruppe von mehreren Drähten (3) unter Verwendung eines Verbindungselements, das eine Umpositionierung der Drähte in Bezug zueinander gestattet, mit der zweiten Gruppe von mehreren beabstandeten Drähten (4) verbunden sind.

15. Drahtgestell (1) nach Anspruch 14, **dadurch gekennzeichnet, dass** das Verbindungselement die gleiche Form und die gleichen Abmessungen wie das Gelenk (10) aufweist.

## Revendications

1. Procédé pour positionner et stabiliser de multiples conteneurs (200) séparés comprenant :
- prendre un châssis en fil métallique (1) ayant un plan de stabilisation (2) comprenant de multiples mailles (5), les dimensions des mailles correspondant aux dimensions extérieures des conteneurs,
- placer le châssis en fil métallique sur un plan de sol de manière à ce que le plan de stabilisation soit adjacent au plan de sol,
- disposer les conteneurs selon un quadrillage régulier, le quadrillage correspondant aux mailles,
- soulever les conteneurs avec une fourche (101) d'un élévateur à fourche (100),
- déplacer les conteneurs vers le châssis en fil métallique,
- mettre le quadrillage de conteneurs en alignement avec les mailles,
- abaisser les conteneurs vers le plan de sol jusqu'à ce qu'ils soient supportés par ledit plan de sol,
- retirer la fourche du quadrillage de conteneurs,
- enlever en soulevant le châssis du plan de sol jusqu'à ce que les mailles entourent les conteneurs afin de permettre leur stabilisation,
- placer au moins un élément de support (6, 6') en-dessous du châssis pour garder le châssis dans une position de stabilisation.

2. Procédé pour positionner et stabiliser de multiples conteneurs séparés (200) comprenant :
- prendre un châssis en fil métallique (1) ayant un plan de stabilisation (2) comprenant de multiples mailles (5), les dimensions des mailles correspondant aux dimensions extérieures des conteneurs,
- placer le châssis sur un plan de sol de manière à ce que le plan de stabilisation soit adjacent au plan de sol,
- placer chaque conteneur dans une maille correspondante du châssis en fil métallique, en laissant le conteneur être supporté par le plan de sol, et une fois que tous les conteneurs ont été placés dans les mailles,
- enlever en soulevant le châssis du plan de sol jusqu'à ce que les mailles entourent les conteneurs afin de permettre leur stabilisation,
- placer au moins un élément de support (6, 6') en-dessous du châssis pour garder le châssis dans une position de stabilisation.

3. Procédé selon l'une quelconque des revendications précédentes, dans lequel l'au moins un élément de support (6, 6') est pivotant par rapport au plan de stabilisation (2), **caractérisé en ce que**, une fois que le châssis (1) est placé sur le plan de sol, l'au moins un élément de support pivote en éloignement du plan de stabilisation afin d'être sensiblement parallèle à celui-ci, et après avoir soulevé le châssis, pivotement de l'au moins un élément de support vers le plan de stabilisation jusqu'à ce qu'il s'étend dans une direction perpendiculaire à celui-ci.

4. Procédé selon l'une quelconque des revendications précédentes, **caractérisé en ce que**, une fois que l'au moins un élément de support (6, 6') est placé pour garder le châssis (1) dans une position de stabilisation, un élément de support additionnel est placé afin de supporter au moins une zone centrale du plan de stabilisation (2).

5. Procédé selon les revendications 3 ou 4, dans lequel l'articulation à charnière (10) permet à l'au moins un élément de support (6, 6') de pivoter vers le plan de stabilisation (2) afin de devenir sensiblement parallèle à celui-ci, **caractérisé en ce que**, une fois que les conteneurs (200) sont enlevés du châssis (1), l'élément de support pivote vers le plan de stabilisation afin de devenir sensiblement parallèle à celui-ci.

6. Châssis en fil métallique (1) adapté pour l'utilisation avec l'un quelconque des procédés selon les revendications 1 à 5, le châssis en fil métallique comprenant :
- un plan de stabilisation (2) comprenant un premier groupe de multiples fils espacés sensiblement parallèles (3) s'étendant dans une première direction, et en connexion avec celui-, un deuxième groupe de multiples fils espacés sensiblement parallèles (4) s'étendant dans une deuxième direction perpendiculaire à la première direction, en formant ainsi de multiples mailles (5), chaque maille étant adaptée pour entourer l'un desdits conteneurs,
- au moins un élément de support (6, 6') étant connecté au plan de stabilisation (2) afin de permettre au plan d'être supporté à une distance prédéterminée au-dessus d'une surface de sol, **caractérisé en ce que**, pour la connexion entre ledit au moins un élément de support (6, 6') et le plan de stabilisation (2), le châssis comprend une articulation à charnière (10) entre ledit au moins un élément de support et le plan de stabilisation de manière à ce que l'élément de support puisse être amené dans une première position dans laquelle le plan de stabilisation peut être placé de manière adjacente à la surface de sol afin de devenir sensiblement parallèle à celui-ci, et puisse être amené dans une deuxième position dans laquelle l'élément de support supporte le plan à la distance prédéterminée au-dessus de la surface de sol.

7. Châssis en fil métallique (1) selon la revendication 6, **caractérisé en ce que** l'articulation à charnière (10) permet à l'élément de support (6, 6') de se déplacer entre une première et une deuxième position, la première position étant sensiblement parallèle au plan (2) et la deuxième position étant sensiblement perpendiculaire au plan.

8. Châssis en fil métallique (1) selon les revendications 6 ou 7, **caractérisé en ce que** l'articulation à charnière (10) permet à l'élément de support (6, 6') de pivoter en éloignement du plan de stabilisation (2) et vers celui-ci.

9. Châssis en fil métallique (1) selon l'une quelconque des revendications 6 à 8, dans lequel le châssis a une forme sensiblement rectangulaire, **caractérisé en ce que** de multiples éléments de support (6, 6') sont positionnés le long de deux côtés opposés du plan.

10. Châssis en fil métallique (1) selon la revendication 9, **caractérisé en ce que** les éléments de support (6, 6') sont des éléments individuels, dans lequel chaque élément individuel correspond à une articulation à charnière (10) individuelle.

11. Châssis en fil métallique (1) selon l'une quelconque des revendications 6 à 10, **caractérisé en ce que** chaque fil est une tige métallique.

12. Châssis en fil métallique (1) selon l'une quelconque des revendications 6 à 11, **caractérisé en ce que** l'articulation à charnière (10) est un élément séparé auquel le plan (2) et l'élément de support (6, 6') peuvent être connectés de manière opérative.

13. Châssis en fil métallique (1) selon la revendication 12, **caractérisé en ce que** l'élément de support (6, 6') peut être connecté de manière ajustable à l'articulation à charnière (10) afin d'obtenir au moins deux distances prédéterminées pour le plan (2) au-dessus de la surface de sol.

14. Châssis en fil métallique (1) selon l'une quelconque des revendications 6 à 13, **caractérisé en ce que** les fils du premier groupe de multiples fils (3) sont connectés au deuxième groupe de multiples fils espacés (4) en utilisant un élément de connexion qui permet aux fils d'être repositionnés les uns par rapport aux autres.

15. Châssis en fil métallique (1) selon la revendication 14, **caractérisé en ce que** l'élément de connexion possède la même forme et les mêmes dimensions que l'articulation à charnière (10).
